# EUROPÄISCHE PATENTSCHRIFT

(11) **EP 3 791 059 B1**
(45) Veröffentlichungstag und Bekanntmachung des Hinweises auf die Patenterteilung: **02.02.2022**
(21) Anmeldenummer: 19755568.3
(22) Anmeldetag: 12.08.2019
(51) Int. Cl.: F03B 3/10, F03B 3/18

(54) **REVERSIBLE PUMPTURBINE UND LEITRAD FÜR DIE REVERSIBLE PUMPTURBINE**
REVERSIBLE PUMP TURBINE AND GUIDE WHEEL FOR THE REVERSIBLE PUMP TURBINE
TURBINE-POMPE RÉVERSIBLE ET ROUE DIRECTRICE POUR LA TURBINE-POMPE RÉVERSIBLE

(30) Priorität: 14.08.2018 AT 506902018
(43) Veröffentlichungstag der Anmeldung: 17.03.2021
(73) Patentinhaber: Andritz AG, 8045 Graz (AT)
(72) Erfinder: LENARCIC, Markus, 1020 Wien (AT)
(74) Vertreter: Tschinder, Thomas
(86) Internationale Anmeldenummer: PCT/EP2019/071603
(87) Internationale Veröffentlichungsnummer: WO 2020/035452

(56) Entgegenhaltungen:
- AT-B- 405 756
- DE-A1- 19 950 227
- FR-A- 372 975
- JP-A- 2003 090 279

## Beschreibung

Die Erfindung betrifft eine reversible Pumpturbine mit einem Laufrad und einem Leitrad bestehend aus einer Vielzahl von Leitschaufeln, die jeweils aus einem von Stirnflächen begrenzten Leitschaufelkörper und einem Drehzapfen zum Verdrehen des Leitschaufelkörpers um eine Drehachse bestehen. Durch das Verdrehen der Leitschaufeln kann das Leitrad geschlossen und geöffnet werden. Der Leitschaufelkörper weist eine der Turbinenströmung zugewandte Turbineneintrittskante und eine der Turbinenströmung abgewandte Turbinenaustrittskante auf. Die einzelnen Leitschaufeln berühren einander im geschlossenen Zustand des Leitrads entlang von Schließkanten, die durch die Berührungskurven benachbarter Leitschaufeln definiert werden. Die Leitschaufeln weisen dabei jeweils zwei beidseits der Drehachse sowie einander gegenüberliegende strömungsführende Flächen auf, die durch die zwei Stirnflächen begrenzt werden.

Die Erfindung betrifft auch ein Leitrad mit mehreren Leitschaufeln für die reversible Pumpturbine.

Die Leitschaufeln einer reversiblen Pumpturbine sind im Turbinenbetrieb stromauf und im Pumpenbetrieb stromab des Laufrades angeordnet. Sie bestehen aus einem

Leitschaufelkörper und einem Drehzapfen. Zusammengefasst bilden die Leitschaufeln das Leitrad. Die Verdrehung des Leitschaufelkörpers erfolgt direkt mittels Verdrehung des Drehzapfens um eine Drehachse. Es existiert im eingebauten Zustand somit eine spezifische Leitradstellung, in der benachbarte Leitschaufeln einander entlang der Schließkanten berühren. Die Verstellung der Leitschaufeln ermöglicht die Regelung einer Pumpturbine von einem bestehenden Betriebspunkt zu einem anderen Betriebspunkt, wobei anzumerken ist, dass die Betriebsführung von Pumpturbinen im Vergleich zu konventionellen Turbinen deutlich komplexer ist und kurze Umschaltzeiten zwischen Pumpen- und Turbinenbetrieb verlangt.

Die Umschaltzeiten einer Pumpturbine vom Pumpen- in den Turbinenbetrieb werden im Wesentlichen durch die Dauer des Synchronisationsprozesses bestimmt, im Zuge dessen die Drehfrequenz der hydraulischen Strömungsmaschine mit jener des elektrischen Netzes synchronisiert wird. Sollte die Leerlaufkennlinie am Synchronisationspunkt eine Turbineninstabilität aufweisen, dann können die dadurch angeregten Drehmomentschwankungen eine erfolgreiche Synchronisation maßgeblich verzögern. Den Schwankungsgrößen liegen phasenverschobene Druck- und Durchflusspulsationen zugrunde, deren Amplituden im Resonanzfall eine fluidmechanische Schwingungsanregung in der hydraulischen Maschine hervorrufen können. Für die Kraftwerksbetreiber stellt dieses Szenario ein sicherheitstechnisches Risiko dar. Die Eintrittswahrscheinlichkeit eines derartigen Ereignisses lässt sich dadurch reduzieren, dass Turbineninstabilitäten um den Synchronisationspunkt verhindert werden.

Im Zuge eines Lastabwurfs (beispielsweise infolge eines Defekts oder Netzausfalls) beschleunigt das Laufrad auf Durchgangsdrehzahl und die Pumpturbine erfährt, in Abhängigkeit des Ausfallsszenarios, transiente Betriebszustände unterschiedlicher Druckniveaus. Neben der Durchgangsdrehzahl stellen insbesondere die Druckanstiege im Spiralgehäuse und die Druckabsenkungen im Saugrohr wesentliche Auslegungsparameter eines Pumpspeicherkraftwerks dar. Je stärker die Turbineninstabilität bei gegebenen Randbedingungen ausgeprägt ist, desto größer der Druckanstieg im Spiralgehäuse und die Druckabsenkung im Saugrohr. Letztere kann im Ernstfall eine sogenannte Wassersäulenseparation im Saugrohr verursachen, bei der, aufgrund von Kavitationsbildung, große Mengen an Dampf entstehen. Da das vorhandene Volumen innerhalb der hydraulischen Strömungsmaschine annähernd konstant ist, erhöht sich der auf das Laufrad wirkende Axialschub entsprechend. Ein derartiges Szenario führt üblicherweise zu irreparablen Schäden an der hydraulischen Strömungsmaschine und dem Krafthaus und stellt somit ein ernstzunehmendes, sicherheitstechnisches Problem im Betrieb von Pumpspeicherkraftwerken dar.

Es müssen daher sowohl im Pumpen- als auch im Turbinenbetrieb neben hohen Wirkungsgraden und einem guten Kavitationsverhalten insbesondere ein ruhiger und stabiler Betrieb durch ein entsprechendes Design sichergestellt werden. Spezifische Vorgaben hinsichtlich der Betriebsstabilität im Zuge von transienten Manövern sind essentielle Bestandteile eines jeden internationalen Ausschreibungsverfahrens, die von den Herstellern unbedingt erfüllt werden müssen.

Eine Pumpturbine ist im Stand der Technik beispielsweise aus AT 405 756 B bekannt.

Der Erfinder hat erkannt, dass strömungsbedingte Turbineninstabilitäten in direkter Wechselwirkung mit dem Leitrad stehen und sich je nach Leitschaufeldesign unterschiedlich beeinflussen lassen. Das Auftreten von Turbineninstabilitäten lässt sich im Allgemeinen auf die Existenz von umlaufenden, stabilen Wirbelstrukturen im schaufellosen Raum, das heißt im Raum zwischen Leit- und Laufrad, zurückführen. Diese Wirbelformationen behindern die aus dem Leitrad zugeführte Turbinenströmung, erhöhen die Verluste in der Pumpturbine und bilden schlussendlich einen instabilen Betriebszustand, im Zuge dessen entsprechende Druck- und Durchflusspulsationen hervorgerufen und Systemanregungen begünstigt werden können. Um die Turbinenstabilität von Pumpturbinen zu erhöhen, müssen die umlaufenden, stabilen Wirbelstrukturen im schaufellosen Raum durchbrochen bzw. destabilisiert werden.

Eine mögliche Methode zur Betriebsstabilisierung stellen die sogenannten asynchron-gestellten Leitschaufeln dar. Dabei werden einzelne Leitschaufeln mittels Einzelservomotoren unabhängig von den übrigen Leitschaufeln verstellt. Diese Ansteuerungsvariante ist jedoch teuer und birgt ein erhöhtes Ausfallsrisiko für das zugrundeliegende Sicherheitskonzept. Da insbesondere im Falle eines Lastabwurfes (beispielsweise infolge eines Defekts) die Schließvorgänge weiterhin ordnungsgemäß funktionieren müssen, werden asynchron-gestellte Leitschaufeln nicht gänzlich als Sicherheitsmechanismus akzeptiert. Hier zeigt sich insbesondere in den zukünftigen Märkten ein ganz klarer Trend weg von derartigen Aktuatoren.

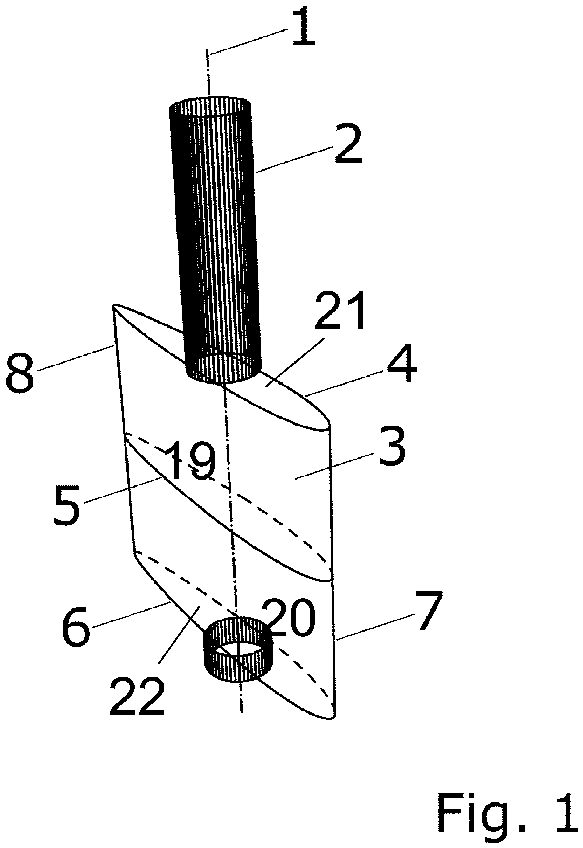

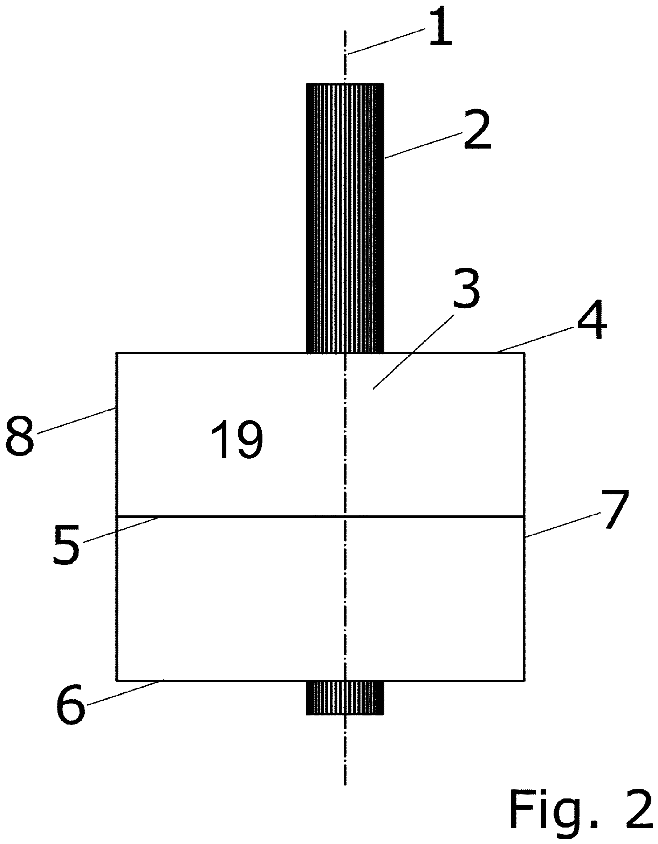

Bei einer konventionellen Leitschaufel sind die Strömungsprofile typischerweise parallel und kongruent (deckungsgleich) (siehe Fig. 1). Die Begrenzungsfläche des Leitschaufelkörpers stellt somit eine Zylinderfläche dar. Die Ein- und Austrittkanten entsprechen Geraden (siehe Fig. 2).

Um den hydraulischen Wirkungsgrad zu erhöhen, werden auch Leitschaufeln mit abweichender Form eingesetzt, sodass alle Strömungsprofile zwar kongruent jedoch nicht parallel sind, siehe z. B. die DE 199 50 227 A1. Im Wesentlichen ergibt sich die Form dieser Leitschaufeln durch idente Strömungsprofile, die zueinander verschoben sind.

Die Leitschaufel aus dem Stand der Technik hat den Nachteil, dass ihr Design nicht flexibel genug ist, um die Anforderungen an Turbinenstabilität, Wirkungsgrad, Kavitationsverhalten und Regelbereich gleichsam erfüllen zu können.

Ziel der Erfindung ist es daher, die Turbinenstabilität von Pumpturbinen im Zuge von transienten Manövern, das heißt während des Synchronisationsprozesses und im Falle eines Lastabwurfs, zu erhöhen. Gleichzeitig soll ein hydraulischer Wirkungsgrad erzielt werden, der mit dem einer konventionellen Leitschaufel vergleichbar ist. Analog dazu soll durch die Erfindung weder Pumpenstabilität noch Kavitationsverhalten maßgeblich beeinflussen werden.

Die strömungsführenden Flächen der jeweiligen Leitschaufel bilden unterschiedliche Strömungsprofile.

Der Leitschaufelkörper ist somit nicht zylindrisch und weist eine Krümmung auf, die durch die unterschiedliche Form der Strömungsprofile erzeugt wird. Aufgrund dieser speziellen Form der Leitschaufel kann die Strömung so geführt werden, dass sie gezielt in die Bereiche der auftretenden Wirbelstrukturen gelangt, diese für die Turbineninstabilität verantwortlichen Wirbelformationen destabilisiert und somit die Betriebsstabilität wesentlich verbessert.

Dadurch, dass die Strömungsprofile unterschiedlich sind, also nicht kongruent sind, kann eine stabilisierende Wirkung in einem Bereich und eine wirkungsgraderhaltende Wirkung in einem anderen Bereich der Leitschaufel gezielt realisiert werden.

Vorzugsweise ist die Turbinenaustrittskante bzw. die Schließkante der Leitschaufel zumindest einfach gekrümmt.

Es ist auch denkbar, dass die Turbinenaustrittskante der Leitschaufel und/oder zumindest eine Schließkante der Leitschaufel zweifach gekrümmt ist.

Es ist sehr günstig, wenn das Strömungsprofil im Mittelbereich der Leitschaufel einen anderen absoluten Strömungswinkel α2 der Absolutgeschwindigkeit der Turbinenströmung am Leitschaufelaustritt in Turbinenrichtung in Bezug auf die zugehörige Umfangskomponente der Absolutgeschwindigkeit der Turbinenströmung hervorruft, als ein Strömungsprofil im Randbereich der Leitschaufel, sodass die Turbinenströmung in Turbinenrichtung den Leitschaufelkörper im Mittelbereich mit einem anderen Strömungswinkel α2 als im Randbereich verlässt.

Dabei ist es besonders günstig, wenn der erwähnte Strömungswinkel α2 im Mittelbereich des Leitschaufelkörpers größer ist als jener im Randbereich. Der Mittelbereich der Leitschaufel ist dabei der Bereich, der ungefähr in der Mitte zwischen den beiden Stirnflächen der Leitschaufel liegt.

Dadurch, dass der Strömungswinkel α2 im Mittelbereich größer ist, wird auch der radial wirkende Impuls der Strömung zum Laufrad hin erhöht und dadurch werden die stabilen umlaufenden Wirbelformationen im schaufellosen Raum destabilisiert und in weiterer Folge ein stabilerer Betriebszustand der reversiblen Pumpturbine erreicht. Der Randbereich versteht sich dabei als jener Bereich, der sich in der Nähe der Stirnflächen des Leitschaufelkörpers befindet.

Der Erfinder hat erkannt, dass dadurch die unerwünschten Wirbelformationen im schaufellosen Bereich destabilisiert werden können.

Ein größerer radial wirkender Impuls der Strömung im Mittelbereich der Leitschaufel lässt sich beispielweise realisieren, wenn die Turbinenaustrittskante der Leitschaufel im Mittelbereich in eine Richtung gekrümmt ist, die senkrecht auf eine Ebene steht, die durch die Drehachse und eine Verbindungsgerade zwischen der Turbineneintrittskante und der Turbinenaustrittskante definiert wird. Wobei die Krümmung in Richtung der Leitschaufeldruckseite (in Turbinenrichtung) erfolgt.

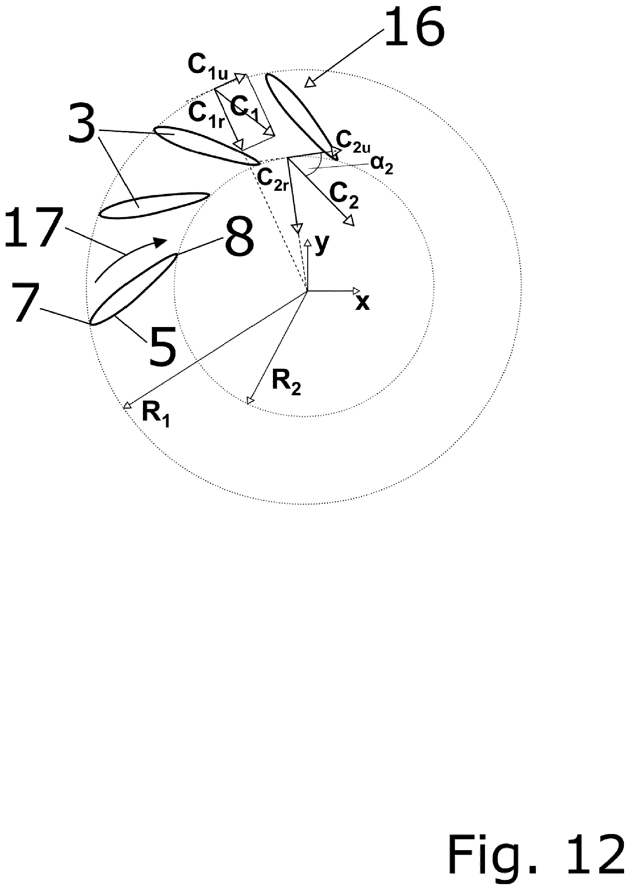

Idealisiert entspricht der Leitschaufelwinkel dem absoluten Strömungswinkel der Absolutgeschwindigkeit der Turbinenströmung entlang des Leitschaufelprofils (siehe Fig. 12). Idealisiert folgt die Strömung dem Leitschaufelprofil. Erfindungsgemäß weist somit das Strömungsprofil im Mittelbereich der Leitschaufel im Bereich der Turbinenaustrittskante einen größeren Leitschaufelwinkel auf als ein Strömungsprofil im Randbereich der Leitschaufel, sodass die Turbinenströmung in Turbinenrichtung den Leitschaufelkörper im Mittelbereich mit einem anderen Strömungswinkel als im Randbereich verlässt. Eine günstige Ausgestaltung der Erfindung ist dadurch gekennzeichnet, dass wenigstens ein Strömungsprofil in seiner Position um eine Gerade, die vorteilhafterweise parallel zur Drehachse der Leitschaufel angeordnet ist, verdreht ist. Infolge der Verdrehung kann der stabilisierende Effekt nochmals verstärkt werden.

Eine günstige Weiterbildung der Erfindung ist dadurch gekennzeichnet, dass wenigstens ein Strömungsprofil in seiner radialen Position in Bezug auf eine Gerade verschoben ist. Dadurch wird die Leitschaufel deutlich flexibler in ihrem Design.

Eine vorteilhafte Ausgestaltung der Erfindung ist dadurch gekennzeichnet, dass die Turbineneintrittskante wenigstens einfach gekrümmt ist, wobei auch alternativ oder zusätzlich die Turbinenaustrittskante wenigstens einfach gekrümmt sein kann. Mit diesen Maßnahmen werden die höchsten Wirkungsgrade realisiert und zeitgleich die für die Turbineninstabilität verantwortlichen Wirbelstrukturen destabilisiert.

Die Erfindung wird anhand von einigen Ausführungsbeispielen in den beiliegenden Figuren näher erläutert:
Fig. 1 zeigt eine perspektivische Darstellung einer konventionellen Leitschaufel nach dem Stand der Technik,
Fig. 2 stellt eine Seitenansicht einer konventionellen Leitschaufel gemäß Fig. 1 dar,
Fig. 3 zeigt eine perspektivische Darstellung einer ersten Variante einer erfindungsgemäßen Leitschaufel,
Fig. 4 zeigt eine perspektivische Darstellung einer zweiten Variante einer erfindungsgemäßen Leitschaufel,
Fig. 5 stellt eine perspektivische Darstellung einer dritten Variante einer erfindungsgemäßen Leitschaufel dar,
Fig. 6 zeigt eine perspektivische Darstellung einer vierten Variante einer erfindungsgemäßen Leitschaufel,
Fig. 7 ist eine perspektivische Darstellung einer fünften Variante einer erfindungsgemäßen Leitschaufel,
Fig. 8 zeigt eine Seitenansicht einer erfindungsgemäßen Leitschaufel gemäß Fig. 7,
Fig. 9 stellt eine perspektivische Darstellung (mit Blick auf die Turbinenaustrittskante) einer erfindungsgemäßen Leitschaufel gemäß Fig. 7 dar,
Fig. 10 zeigt zwei nebeneinanderliegende Leitschaufeln des Leitrads,
Fig. 11 zeigt einen Maschinenschnitt einer reversiblen Pumpturbine und
Fig. 12 zeigt die Geschwindigkeitsdreiecke an den Leitschaufeln.

In Fig. 1 ist eine Leitschaufel nach dem Stand der Technik dargestellt. Gleiche Teile sind in weiterer Folge mit den gleichen Bezugszeichen versehen. Diese Leitschaufel weist eine Leitschaufeldrehachse 1, einen Drehzapfen 2 und einen Leitschaufelkörper 3 auf. Der Leitschaufelkörper 3 ist durch die Strömungsprofile 4, 5 und 6 definiert, die zueinander parallel und kongruent (deckungsgleich) sind. Damit weist die Leitschaufel einen zylindrischen Leitschaufelkörper 3 auf. Die gleichen Strömungsprofile 4, 5 und 6 definieren einander gegenüberliegende strömungsführende Flächen 19, 20, die durch die zwei Stirnflächen 21, 22 begrenzt sind. Die Turbineneintrittskante 7 und die Turbinenaustrittskante 8 entsprechen Geraden. Diese Form der Strömungsprofile 4, 5, 6 und des Leitschaufelkörpers 3 ist üblicherweise auf einen maximalen Wirkungsgrad ausgelegt. Auftretende Wirbelstrukturen (im Raum zwischen Leitrad und Laufrad der Pumpturbine) können damit nicht destabilisiert werden.

Aus der Seitenansicht der Leitschaufel in Fig. 2 ist klar ersichtlich, dass die Turbineneintrittskante 7 und die Turbinenaustrittskante 8 Geraden entsprechen, wobei diese parallel zur Leitschaufeldrehachse 1 ausgerichtet sind. Der Leitschaufelkörper 3 wird durch ein oberes Strömungsprofil 4 und ein unteres Strömungsprofil 6, die die Stirnseiten des Leitschaufelkörpers 3 bilden, begrenzt. Das bzw. jedes zwischen dem oberen Strömungsprofil 4 und dem unteren Strömungsprofil 6 befindliche Strömungsprofil 5 weist dieselbe Form auf. Der Leitschaufelkörper 3 ist dabei durch die Strömungsprofile 4, 5 und 6 definiert, die zueinander parallel und kongruent sind.

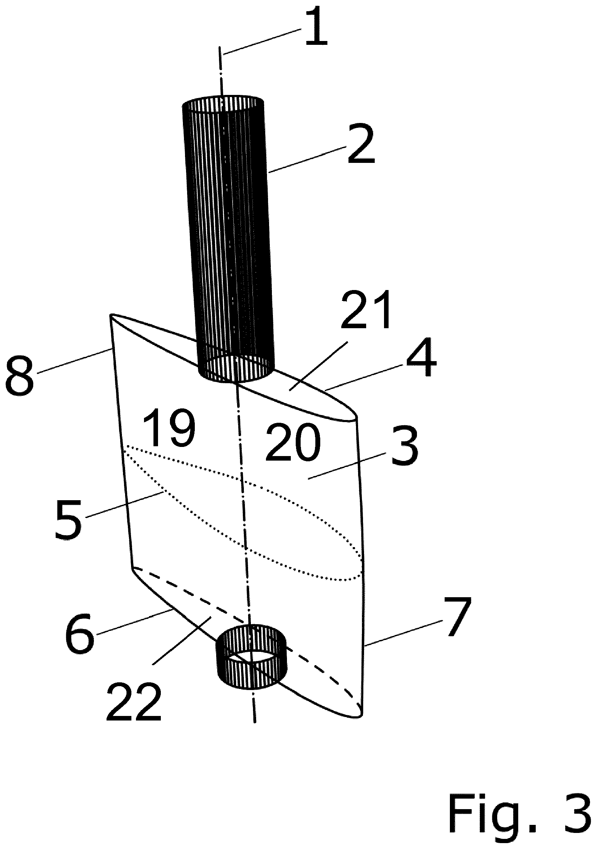

Fig. 3 zeigt eine perspektivische Darstellung einer ersten Variante einer erfindungsgemäßen Leitschaufel. Sie entspricht im Wesentlichen einer Ausführung nach Fig. 1 mit einer Leitschaufeldrehachse 1, einem Drehzapfen 2, einem Leitschaufelkörper 3, einer Turbineneintrittskante 7 und einer Turbinenaustrittskante 8. Der Leitschaufelkörper 3 ist ebenfalls durch die Strömungsprofile 4, 5 und 6 definiert. Im Gegensatz zum Stand der Technik ist das Strömungsprofil 5 mit den Strömungsprofilen 4 und 6 nicht kongruent und ist im Allgemeinen an einer beliebigen Stelle zwischen den Stirnseiten angeordnet. Das Strömungsprofil 5 ist beispielsweise strömungsstabilisierend, während die Strömungsprofile 4 und 6 wirkungsgradmaximierend sind. Die Verbindungslinien zwischen den einzelnen Strömungsprofilen 4, 5, und 6 entsprechen vorteilhafterweise B-Spline-Kurven und bilden einander gegenüberliegende strömungsführende Flächen 19, 20, die durch die zwei Stirnflächen 21, 22 begrenzt sind. Grundsätzlich können auch eines oder beide Strömungsprofile 4, 6 an den Stirnseiten 21, 22 des Leitschaufelkörpers 3 strömungsstabilisierend und nicht kongruent zueinander ausgeführt werden.

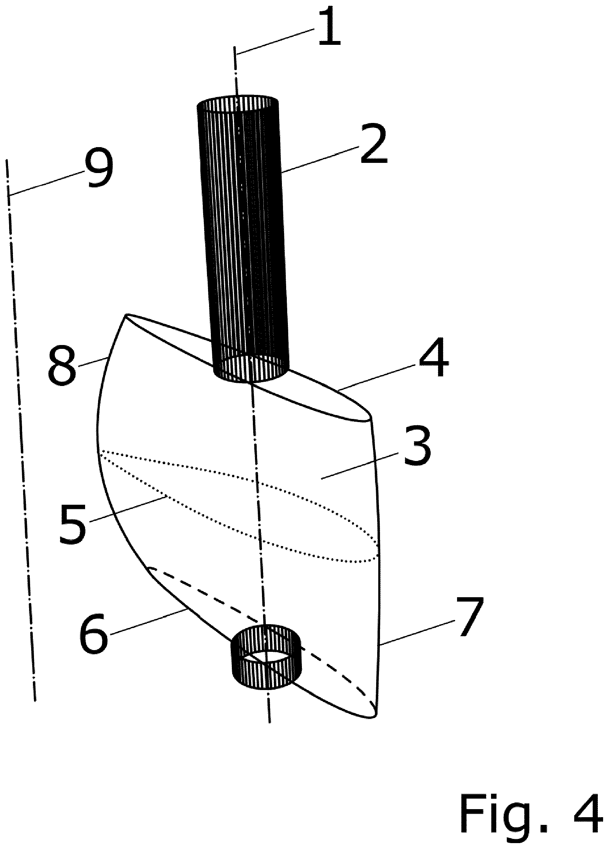

In Fig. 4 ist eine zweite Variante einer erfindungsgemäßen Leitschaufel dargestellt. Hier ist das Strömungsprofil 5 mit den Strömungsprofilen 4 und 6 ebenfalls nicht kongruent. Das Strömungsprofil 5 ist zudem in Bezug auf eine Gerade 9 verdreht positioniert. Die Gerade 9 ist beispielsweise parallel zur Leitschaufeldrehachse 1 angeordnet. Das Strömungsprofil 5 ist beispielsweise strömungsstabilisierend, während die Strömungsprofile 4 und 6 wirkungsgradmaximierend sind. Die Verbindungslinien zwischen den einzelnen Strömungsprofilen 4, 5, und 6 entsprechen vorteilhafterweise B-Spline-Kurven. Durch diese Verdrehung bilden die Turbineneintrittskante 7 und Turbinenaustrittskante 8 keine Geraden, sondern gekrümmte Kurve.

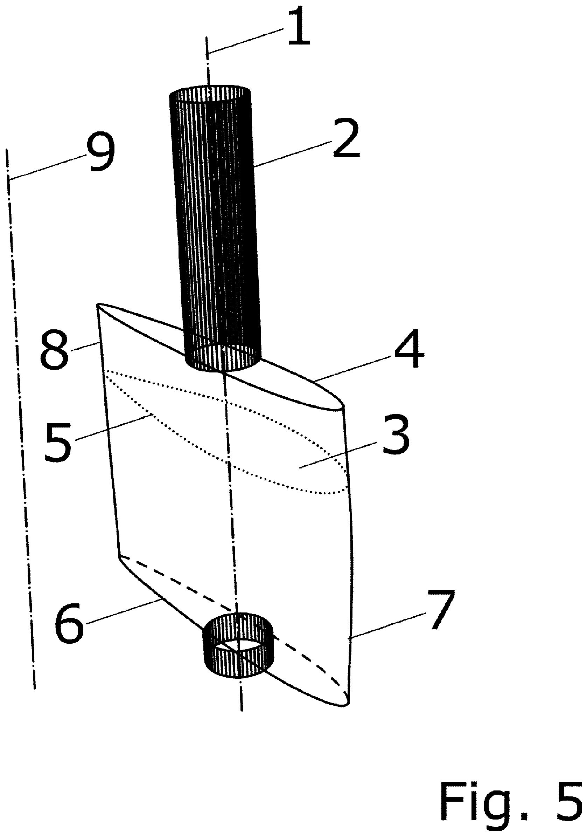

Fig. 5 zeigt eine weitere Variante einer erfindungsgemäßen Leitschaufel, wobei hier das Strömungsprofil 5 nicht mit den Strömungsprofilen 4 und 6 kongruent ist und sich an einer anderen Stelle des Leitschaufelkörpers 3 (gegenüber der Variante von Fig. 3 entlang einer Geraden 9 axial verschoben) befindet. Die Gerade 9 ist beispielsweise parallel zur Leitschaufeldrehachse 1 angeordnet. Das Strömungsprofil 5 ist beispielsweise strömungsstabilisierend, während die Strömungsprofile 4 und 6 wirkungsgradmaximierend sind. Die Verbindungslinien zwischen den einzelnen Strömungsprofilen 4, 5, und 6 entsprechen vorteilhafterweise B-Spline-Kurven.

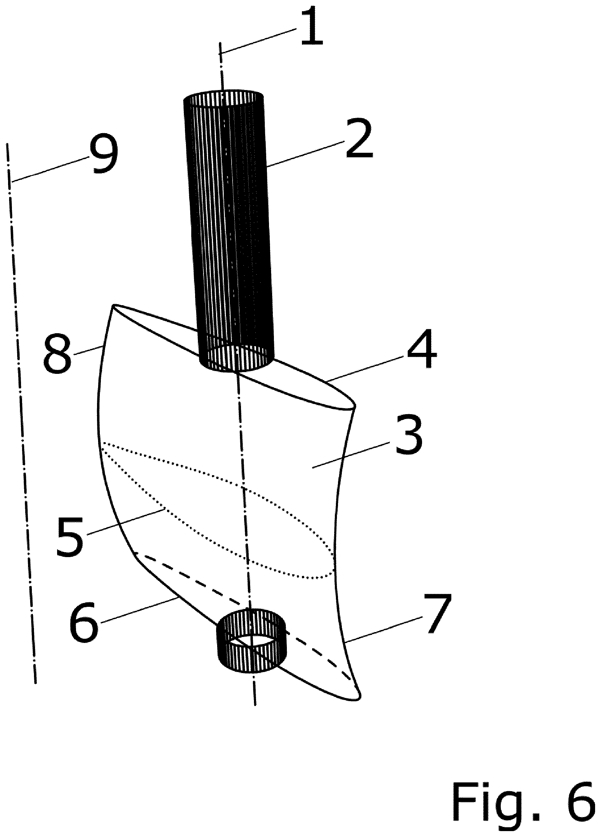

Fig. 6 stellt einen Leitschaufelkörper 3 dar, der analog zu Fig. 4 aufgebaut ist. Allerdings wird hier das strömungsstabilisierende Strömungsprofil 5 nicht um eine Gerade verdreht, sondern in Bezug auf eine Gerade 9 radial verschoben.

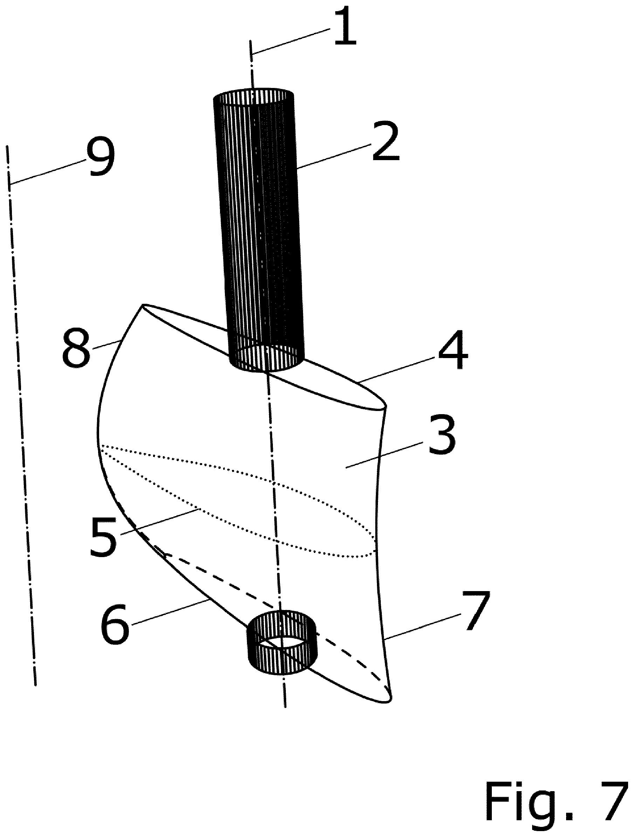

Fig. 7 zeigt nun eine Variante der Erfindung, die die Ausführungen von Fig. 4 und Fig. 6 kombiniert. Damit ist das Strömungsprofil 5 um eine Gerade 9 verdreht sowie in Bezug auf die Gerade 9 radial verschoben. Die Gerade 9 ist beispielsweise parallel zur Leitschaufeldrehachse 1 angeordnet. Die Turbineneintrittskante 7 und die Turbinenaustrittskante 8 sind gekrümmt. Das Strömungsprofil 5 ist beispielsweise strömungsstabilisierend, während die Strömungsprofile 4 und 6 wirkungsgradmaximierend sind. Die Verbindungslinien zwischen den einzelnen Strömungsprofilen 4, 5, und 6 entsprechen vorteilhafterweise B-Spline-Kurven.

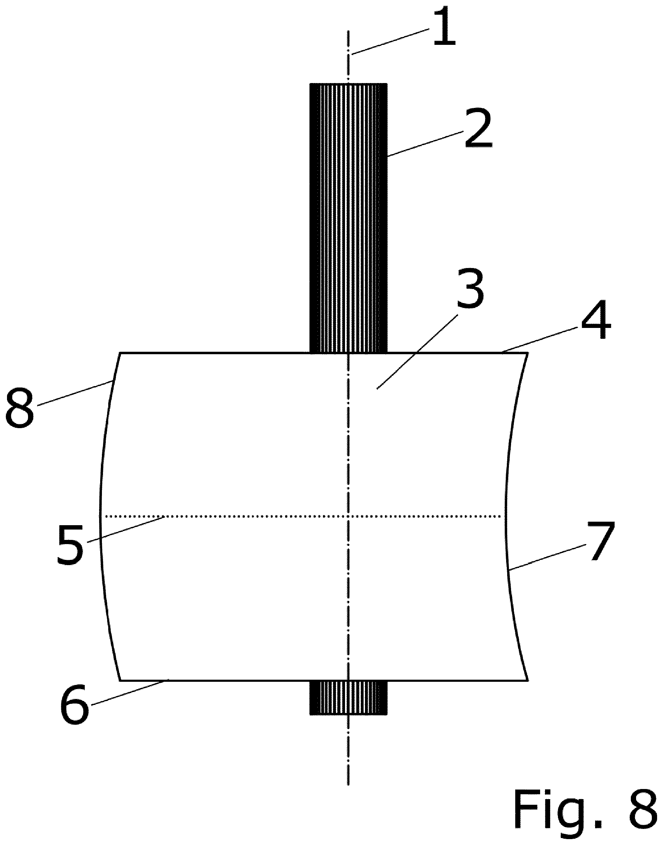

Fig. 8 zeigt eine Seitenansicht der Variante nach Fig. 7. Hier sind die Verschiebung und/oder die Verdrehung sowie die gekrümmte Turbineneintrittskante 7 und Turbinenaustrittskante 8 gut erkennbar.

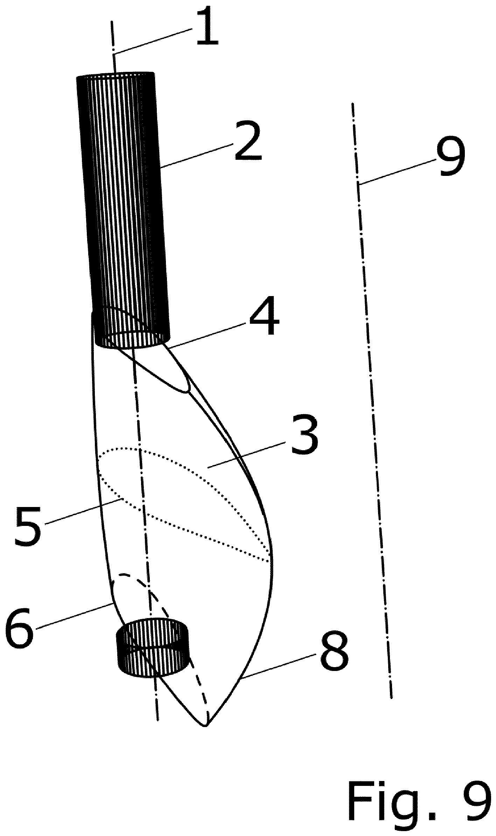

Fig. 9 stellt eine perspektivische Ansicht der Variante nach Fig. 7 dar, wobei in dieser Darstellung auf die Turbinenaustrittskante 8 geblickt wird. Besonders gut ist hier die Verdrehung des Strömungsprofils 5 gegenüber den Strömungsprofilen 4 und 6 zu sehen.

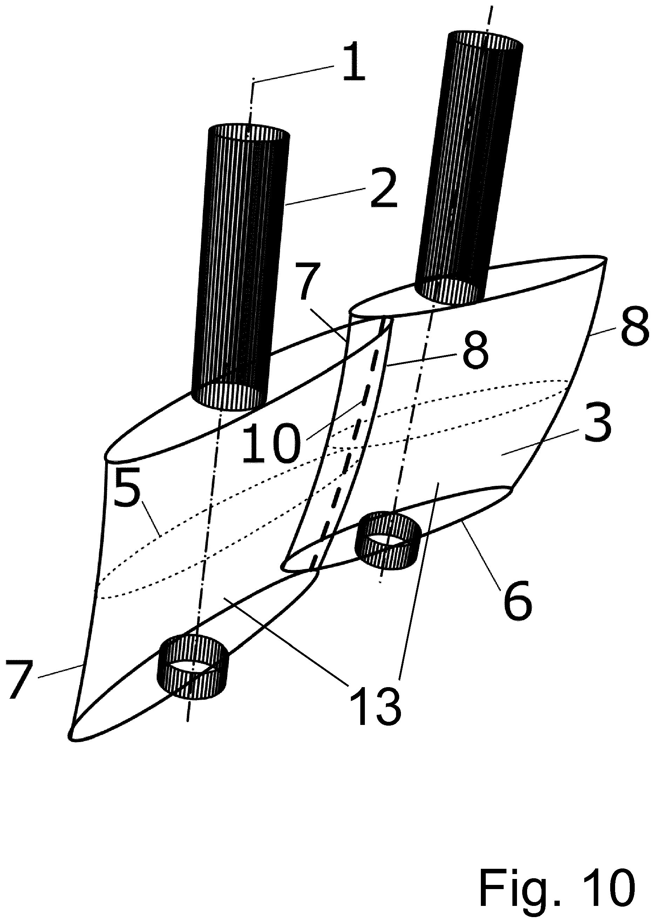

In Fig. 10 sind zwei nebeneinander angeordnete Leitschaufeln 13 des Leitrades 16 angeordnet und zwar im geschlossenen Zustand des Leitrades 16. Man erkennt dabei, dass sich die beiden Leitschaufeln 13 entlang der Schließkante 10 berühren. Man erkennt hier auch, dass die Schließkante 10 nicht mit der Turbineneintrittskante 7 oder der Turbinenaustrittskante 8 zusammenfallen muss.

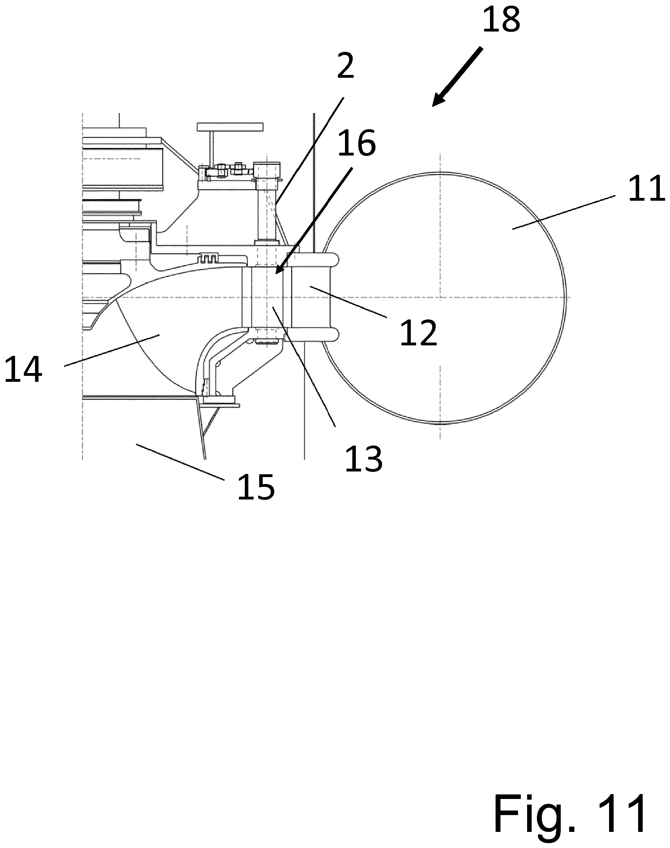

In Fig. 11 ist ein Maschinenschnitt einer reversiblen Pumpturbine 18 dargestellt. Im Turbinenbetrieb trifft das Triebwasser aus dem Spiralgehäuse 11 auf die stationären Stützschaufeln 12 und danach auf die verstellbaren Leitschaufeln 13 des Leitrads 16. Danach trifft das Triebwasser auf das Laufrad 14 und verlässt die reversible Pumpturbine 18 über das Saugrohr 15.

In Fig. 12 sind Geschwindigkeitsdreiecke an den Leitschaufeln 13 dargestellt. Die Turbinenströmung 17 ist mit einem Pfeil angedeutet. Die einzelnen Variablen bezeichnen dabei folgende Größen:
- R1: Radius des Leitschaufeleintritts in Turbinenrichtung zur Maschinenhauptachse
- C1: Absolutgeschwindigkeit am Leitschaufeleintritt in Turbinenrichtung
- C1u: Umfangskomponente der Absolutgeschwindigkeit am Leitschaufeleintritt in Turbinenrichtung
- C1r: Radialkomponente der Absolutgeschwindigkeit am Leitschaufeleintritt in Turbinenrichtung
- R2: Radius des Leitschaufelaustritts in Turbinenrichtung zur Maschinenhauptachse
- C2: Absolutgeschwindigkeit am Leitschaufelaustritt in Turbinenrichtung
- C2u: Umfangskomponente der Absolutgeschwindigkeit am Leitschaufelaustritt in Turbinenrichtung
- C2r: Radialkomponente der Absolutgeschwindigkeit am Leitschaufelaustritt in Turbinenrichtung
- α2: Absoluter Strömungswinkel der Absolutgeschwindigkeit am Leitschaufelaustritt in Turbinenrichtung in Bezug auf die zugehörige Umfangskomponente der Absolutgeschwindigkeit C2u am Leitschaufelaustritt in Turbinenrichtung, d.h. der eingeschlossene Winkel zwischen C2 und C2u

Wobei der Index 1 dem Leitschaufeleintritt in Turbinenrichtung entspricht und der Index 2 dem Leitschaufelaustritt in Turbinenrichtung. Der Index u steht für die Umfangskomponente und der Index r für die Radialkomponente.

R1 und R2, und damit der Leitschaufelein- und -austritt sind von der Leitschaufelöffnung abhängig.

## Patentansprüche

1. Leitrad (16) für eine Pumpturbine (18), das durch mehrere Leitschaufeln(13) gebildet wird, wobei jede Leitschaufel (13) einen Leitschaufelkörper (3) mit zwei Stirnflächen (21, 22) und einem Drehzapfen (2) zum Verdrehen des Leitschaufelkörpers (3) um eine Drehachse (1) aufweist, wobei der Leitschaufelkörper (3) eine der Turbinenströmung (17) zugewandte Turbineneintrittskante (7) und eine der Turbinenströmung (17) abgewandte Turbinenaustrittskante (8) aufweist, wobei sich die einzelnen Leitschaufeln (13) im geschlossenen Zustand des Leitrads (16) entlang von Schließkanten (10) berühren, die durch die Berührungskurven benachbarter Leitschaufeln (13) definiert werden, wobei die Leitschaufel (13) zwei beidseits der Drehachse (1) sowie einander gegenüberliegende strömungsführende Flächen (19, 20) aufweist, die durch die zwei Stirnflächen (21, 22) begrenzt sind, wobei die strömungsführenden Flächen (19, 20) unterschiedliche Strömungsprofile (4, 5, 6) bilden, **dadurch gekennzeichnet, dass** das Strömungsprofil (5) im Mittelbereich der Leitschaufel (13) im Bereich der Turbinenaustrittskante (8) einen größeren Leitschaufelwinkel aufweist als ein Strömungsprofil (4, 6) im Randbereich der Leitschaufel (13), wobei der Randbereich jener Bereich ist, der sich in der Nähe der Stirnflächen (21, 22) des Leitschaufelkörpers befindet, sodass das Strömungsprofil (5) im Mittelbereich der Leitschaufel (13) einen größeren absoluten Strömungswinkel (α2) der Absolutgeschwindigkeit (C2) der Turbinenströmung (17) am Leitschaufelaustritt in Turbinenrichtung in Bezug auf die zugehörige Umfangskomponente der Absolutgeschwindigkeit (C2u) der Turbinenströmung (17) hervorruft, als ein Strömungsprofil (4, 6) im Randbereich der Leitschaufel (13), sodass die Turbinenströmung (17) in Turbinenrichtung den Leitschaufelkörper (3) im Mittelbereich mit einem größeren Strömungswinkel (α2) als im Randbereich verlässt.

2. Leitrad (16) nach Anspruch 1, **dadurch gekennzeichnet, dass** die Turbinenaustrittskante (8) der Leitschaufel (13) zumindest einfach gekrümmt ist.

3. Leitrad (16) nach Anspruch 1 oder 2, **dadurch gekennzeichnet, dass** die Schließkante (10) der Leitschaufel (13) zumindest einfach gekrümmt ist.

4. Leitrad (16) nach Anspruch 2 oder 3, **dadurch gekennzeichnet, dass** die Turbinenaustrittskante (8) der Leitschaufel (13) und/oder zumindest eine Schließkante (10) der Leitschaufel (13) zweifach gekrümmt ist.

5. Leitrad (16) nach einem der Ansprüche 1 bis 4, **dadurch gekennzeichnet, dass** die Turbinenaustrittskante (8) der Leitschaufel (13) im Mittelbereich in eine Richtung gekrümmt ist, die senkrecht auf eine Ebene steht, die durch die Drehachse (1) und eine Verbindungsgerade zwischen der Turbineneintrittskante (7) und der Turbinenaustrittskante (8) definiert ist.

6. Leitrad (16) nach Anspruch 5, **dadurch gekennzeichnet, dass** die Turbinenaustrittskante (8) der Leitschaufel (13) in Turbinenrichtung in Richtung der Leitschaufeldruckseite gekrümmt ist.

7. Leitrad (16) nach einem der Ansprüche 1 bis 6, **dadurch gekennzeichnet, dass** wenigstens ein Strömungsprofil (4, 5, 6) in seiner Position um eine Gerade (9), die parallel zur Drehachse (1) der Leitschaufel (13) angeordnet ist, verdreht ist.

8. Leitrad (16) nach einem der Ansprüche 1 bis 7, **dadurch gekennzeichnet, dass** wenigstens ein Strömungsprofil (4, 5, 6) in seiner radialen Position in Bezug auf eine Gerade (9) parallel zur Drehachse (1) verschoben ist.

9. Leitrad (16) nach einem der Ansprüche 1 bis 8, **dadurch gekennzeichnet, dass** die Turbineneintrittskante (7) wenigstens einfach gekrümmt ist.

10. Leitrad (16) nach einem der Ansprüche 1 bis 9, **dadurch gekennzeichnet, dass** die Turbinenaustrittskante (8) der Leitschaufel (13) derart zumindest einfach gekrümmt ist, dass ein Wendepunkt der Krümmung im Mittelbereich der Leitschaufel (13) liegt.

11. Leitrad (16) nach einem der Ansprüche 1 bis 10, **dadurch gekennzeichnet, dass** die Strömungsprofile (4) und (6) im jeweiligen Randbereich der Leitschaufel (13) nicht kongruent sind.

12. Reversible Pumpturbine (18) mit einem Laufrad (14) und einem Leitrad (16) gemäß einem der Ansprüche 1 bis 11

## Claims

1. Pump-turbine (18) wicket gate (16) formed by several guide vanes (13), each guide vane (13) having a guide vane body (3) with two end faces (21, 22) and a pivot (2) for rotating the guide vane body (3) around an axis of rotation (1), where the guide vane body (3) has a turbine leading edge (7) facing the turbine flow (17) and a turbine trailing edge (8) facing away from the turbine flow (17), where the individual guide vanes (13) come into contact with one another along closing edges (10) when the wicket gate (16) is closed and these closing edges are defined by the contact curves of adjacent guide vanes (13), where the guide vane (13) has two flow-guiding surfaces (19, 20) on either side of the axis of rotation (1) and opposite one another that are limited by the two end faces (21, 22), where the flow-guiding surfaces (19, 20) form different flow profiles (4, 5, 6), **characterised in that** the flow profile (5) in the mid-span section of the guide vane (13) has a larger guide vane angle in the area of the turbine trailing edge (8) than a flow profile (4, 6) in the boundary area of the guide vane (13), where the boundary area is the area near the end faces (21, 22) of the guide vane body, so that the flow profile (5) in the mid-span section of the guide vane (13) creates a larger absolute flow angle (α2) of the absolute velocity (C2) of the turbine flow (17) at the guide vane trailing edge in turbine direction, with regard to the related circumferential component of the absolute velocity (C2u) of the turbine flow (17), than a flow profile (4, 6) in the boundary area of the guide vane (13) so that the turbine flow (17) in turbine direction leaves the guide vane body (3) in the mid-span section with a larger flow angle (α2) than in the boundary area.

2. Wicket gate (16) according to claim 1, **characterised in that** the turbine trailing edge (8) of the guide vane (13) is curved at least once.

3. Wicket gate (16) according to claim 1 or 2, **characterised in that** the closing edge (10) of the guide vane (13) is curved at least once.

4. Wicket gate (16) according to claim 2 or 3, **characterised in that** the turbine trailing edge (8) of the guide vane (13) and/or at least one closing edge (10) of the guide vane (13) has double curvature.

5. Wicket gate (16) according to one of claims 1 to 4, **characterised in that** the turbine trailing edge (8) of the guide vane (13) is curved in the mid-span section in a direction that is perpendicular to a plane defined by the axis of rotation (1) and a connecting straight line between the turbine leading edge (7) and the turbine trailing edge (8).

6. Wicket gate (16) according to claim 5, **characterised in that** the turbine trailing edge (8) of the guide vane (13) is curved in turbine direction in the direction of the guide vane pressure side.

7. Wicket gate (16) according to one of claims 1 to 6, **characterised in that** the position of at least one flow profile (4, 5, 6) is rotated around a straight line (9) that is disposed in parallel to the axis of rotation (1) of the guide vane (13).

8. Wicket gate (16) according to one of claims 1 to 7, **characterised in that** the radial position of at least one flow profile (4, 5, 6) is misaligned in relation to a straight line (9) parallel to the axis of rotation (1).

9. Wicket gate (16) according to one of claims 1 to 8, **characterised in that** the turbine leading edge (7) is curved at least once.

10. Wicket gate (16) according to one of claims 1 to 9, **characterised in that** the turbine trailing edge (8) of the guide vane (13) is curved at least once in such a way that the inflection point of the curve lies in the mid-span section of the guide vane (13).

11. Wicket gate (16) according to one of claims 1 to 10, **characterised in that** the flow profiles (4) and (6) in the respective boundary area of the guide vane (13) are not congruent.

12. Reversible pump-turbine (18) with a runner (14) and a wicket gate (16) according to one of claims 1 to 11.

## Revendications

1. Aubage (16) pour une pompe-turbine (18), qui est formé par plusieurs aubes directrices (13), chaque aube directrice (13) ayant un corps d'aube directrice (3) doté de deux faces d'extrémité (21, 22) et un tourillon (2) pour faire tourner le corps d'aube directrice (3) autour d'un axe de rotation (1), le corps d'aube directrice (3) présentant un bord d'attaque de turbine (7) orienté vers l'écoulement de turbine (17) et un bord de fuite de turbine (8) opposé à l'écoulement de turbine (17), chacune des aubes directrices (13) entrant en contact les unes avec les autres le long des bords de fermeture (10), lorsque l'aubage (16) est fermé, qui sont définis par les courbes de contact des aubes directrices (13) adjacentes, l'aube directrice (13) ayant deux surfaces de guidage d'écoulement (19, 20) de chaque côté de l'axe de rotation (1) et se faisant face l'une à l'autre, qui sont limitées par les deux faces d'extrémité (21, 22), les surfaces de guidage d'écoulement (19, 20) formant différents profils d'écoulement (4, 5, 6), **caractérisé en ce que** le profil d'écoulement (5) dans la zone médiane de l'aube directrice (13) a un angle d'aube directrice supérieur dans la zone du bord de fuite de turbine (8) qu'un profil d'écoulement (4, 6) dans la zone marginale de l'aube directrice (13), la zone marginale étant la zone proche des faces d'extrémité (21, 22) du corps d'aube directrice, de sorte que le profil d'écoulement (5) dans la zone médiane de l'aube directrice (13) forme un angle d'écoulement absolu supérieur (α2) de la vitesse absolue (C2) de l'écoulement de turbine (17) au niveau du bord de fuite d'aube directrice dans la direction de turbine, par rapport au composant circonférentiel associé de la vitesse absolue (C2u) de l'écoulement de turbine (17), à un profil d'écoulement (4, 6) dans la zone marginale de l'aube directrice (13), de sorte que l'écoulement de turbine (17) dans la direction de turbine laisse le corps d'aube directrice (3) dans la zone médiane selon un angle d'écoulement (α2) supérieur à celui dans la zone marginale.

2. Aubage (16) selon la revendication 1, **caractérisé en ce que** le bord de fuite de turbine (8) de l'aube directrice (13) est incurvé au moins une fois.

3. Aubage (16) selon la revendication 1 ou 2, **caractérisé en ce que** le bord de fermeture (10) de l'aube directrice (13) est incurvé au moins une fois.

4. Aubage (16) selon la revendication 2 ou 3, **caractérisé en ce que** le bord de fuite de turbine (8) de l'aube directrice (13) et/ou au moins un bord de fermeture (10) de l'aube directrice (13) présente une double courbure.

5. Aubage (16) selon l'une quelconque des revendications 1 à 4, **caractérisé en ce que** le bord de fuite de turbine (8) de l'aube directrice (13) est incurvé dans la zone médiane dans une direction qui est perpendiculaire à un plan défini par l'axe de rotation (1) et une ligne droite de liaison entre le bord d'attaque de turbine (7) et le bord de fuite de turbine (8).

6. Aubage (16) selon la revendication 5, **caractérisé en ce que** le bord de fuite de turbine (8) de l'aube directrice (13) est incurvé dans la direction de turbine dans la direction du côté pression de l'aube directrice.

7. Aubage (16) selon l'une quelconque des revendications 1 à 6, **caractérisé en ce que** au moins un profil d'écoulement (4, 5, 6) dans sa position est tourné autour d'une ligne droite (9), qui est parallèle à l'axe de rotation (1) de l'aube directrice (13).

8. Aubage (16) selon l'une quelconque des revendications 1 à 7, **caractérisé en ce que** au moins un profil d'écoulement (4, 5, 6) dans sa position radiale est déplacé par rapport à une ligne droite (9) parallèle à l'axe de rotation (1).

9. Aubage (16) selon l'une quelconque des revendications 1 à 8, **caractérisé en ce que** le bord d'attaque de turbine (7) est incurvé au moins une fois.

10. Aubage (16) selon l'une quelconque des revendications 1 à 9, **caractérisé en ce que** le bord de fuite de turbine (8) de l'aube directrice (13) est incurvé au moins une fois de manière à ce que le point d'inflexion de la courbe se situe dans la zone médiane de l'aube directrice (13).

11. Aubage (16) selon l'une quelconque des revendications 1 à 10, **caractérisé en ce que** les profils d'écoulement (4) et (6) ne sont pas congruents dans la zone marginale respective de l'aube directrice (13).

12. Pompe-turbine réversible (18) comportant une roue motrice (14) et un aubage (16) selon l'une des revendications 1 à 11.
